# EUROPÄISCHE PATENTSCHRIFT

(11) **EP 0 874 467 B1**
(45) Veröffentlichungstag und Bekanntmachung des Hinweises auf die Patenterteilung: **22.11.2006**
(21) Anmeldenummer: 98102663.6
(22) Anmeldetag: 17.02.1998
(51) Int. Cl.: H04B 1/08

(54) **Rundfunkempfänger**
Broadcast receiver
Récepteur de radiodiffusion

(30) Priorität: 07.04.1997 DE 19714213
(43) Veröffentlichungstag der Anmeldung: 28.10.1998
(73) Patentinhaber: ROBERT BOSCH GMBH, 70442 Stuttgart (DE)
(72) Erfinder: Napierala, Dieter, 31135 Hildesheim (DE)

(56) Entgegenhaltungen:
- DE-A- 3 346 370
- DE-A- 4 007 216
- DE-A- 4 009 835
- DE-U- 9 420 590

## Beschreibung

### Stand der Technik

Die Erfindung geht von einem Rundfunkempfänger nach der Gattung des Hauptanspruchs aus.

Aus dem Katalog "Mobile Audio Systems" der Firma Blaupunkt ist eine Systembeschreibung des Rundfunkempfängers "Berlin RCM 303A" bekannt, bei dem eine Cursor-Wippe mit den Funktionen UP, DOWN und ENTER vorgesehen ist. Die Cursor-Wippe dient der sinngemäß richtigen Steuerung eines als Rechtspfeil ausgestalteten Cursors, welcher sich am linken Rand eines Bildschirms befindet. Am Bildschirm sind dabei untereinander, das heißt in einer einzigen Spalte verschiedene Bedienfunktionen dargestellt, wobei der Cursor auf eine der Bedienfunktionen zeigt. Dem Benutzer wird durch einen oberhalb und/oder unterhalb des Cursors befindlichen Pfeil stets die sinnvolle Bedienrichtung, das heißt also in der Spalte nach oben und/oder nach unten visualisiert. Durch entsprechende Betätigung der Cursor-Wippe, das heißt durch Neigung in die eine oder die andere Richtung, kann der Benutzer innerhalb der am Bildschirm angezeigten Spalte mit dem Cursor eine beliebige Bedienfunktion auswählen. Mit der in der Wippe liegenden ENTER-Taste wird dann die rechts neben dem Cursor befindliche Funktion ausgewählt.

Die DE 33 46 370 A1 zeigt ein Verfahren zur Anzeige von Informationen in einem Kraftfahrzeug, mittels dem sowohl Messwerte im Kraftfahrzeug sowie Betriebsdaten, Fahrdaten und Verkehrsinformationen optisch und akustisch angezeigt werden können. Für die Anzeige werden sämtliche Informationen in Blöcken gegliedert, die durch mehrmaliges Betätigen einer Umschalttaste in entsprechender Folge über die Anzeigevorrichtung ausgegeben werden. Hierbei wird die Anzeigevorrichtung in vier Anzeigefelder gegliedert, in denen jeweils ein Informationsmenü eines Informationsblocks erscheint. Zur Auswahl werden den Anzeigefeldern in gleicher Anordnung an einem Bedienungsteil Auswahltaster zugeordnet, bei deren Betätigung weiter aufgegliederte Informationen über die Anzeigevorrichtung ausgegeben werden.

### Vorteile der Erfindung

Der erfindungsgemäße Rundfunkempfänger mit den Merkmalen des Hauptanspruchs hat demgegenüber den Vorteil, daß die Anzeigevorrichtung zur Darstellung der Bedienfunktionen besser ausgenutzt wird, so daß dem Benutzer auf derselben Fläche eine größere Auswahl von Bedienfunktionen angeboten werden kann. Auf diese Weise wird die Übersichtlichkeit und der Bedienkomfort für den Benutzer erhöht.

Durch die in den Unteransprüchen aufgeführten Maßnahmen sind vorteilhafte Weiterbildungen und Verbesserungen des im Hauptanspruch angegebenen Rundfunkempfängers möglich.

Besonders vorteilhaft ist es, daß die Positionen Elemente einer Matrix aus Spalten und Zeilen bilden. Auf diese Weise wird die an der Anzeigevorrichtung zur Verfügung stehende Darstellungsfläche noch besser ausgenutzt, so daß die Übersichtlichkeit und der Bedienkomfort für den Benutzer weiter erhöht werden.

Vorteilhaft ist weiterhin, daß eine erste Schaltwippe vorgesehen ist, mittels der eine Auswahl von Positionen in den Spalten erfolgt, und daß eine zweite Schaltwippe vorgesehen ist, mittels der eine Auswahl von Positionen in den Zeilen erfolgt. Auf diese Weise erfordert die Auswahl einer Bedienfunktion an der Anzeigevorrichtung für den Benutzer wenig Bedienaufwand, so daß ein erhöhter Bedienkomfort zur Verfügung steht.

Ein weiterer Vorteil besteht darin, daß nur zwei Bedienelemente notwendig sind, um in vier Richtungen an der Anzeigevorrichtung dargestellte Bedienfunktionen auszuwählen, so daß Material, Herstellungsaufwand, Platz und Kosten eingespart werden. Weiterhin wird die Aufmerksamkeit des Benutzers für die Auswahl der Bedienfunktionen an der Anzeigevorrichtung nur wenig beansprucht, da er für die entsprechende Bedienung nur zwischen zwei Bedienelementen auswählen muß. Dadurch wird die Bedienung auch schneller. Dies ist vor allem bei Ausbildung des Rundfunkempfängers als Autoradio von Bedeutung, da in diesem Fall der Benutzer nur unwesentlich vom Straßenverkehr abgelenkt wird.

Ein weiterer Vorteil besteht darin, daß eine erste Taste vorgesehen ist, mittels der eine Auswahl von Positionen in den Spalten in einer ersten Richtung erfolgt, daß eine zweite Taste vorgesehen ist, mittels der eine Auswahl von Positionen in den Spalten in der der ersten Richtung entgegengesetzten Richtung erfolgt, daß eine dritte Taste vorgesehen ist, mittels der eine Auswahl von Positionen in den Zeilen in einer ersten Richtung erfolgt, und daß eine vierte Taste vorgesehen ist, mittels der eine Auswahl von Positionen in den Zeilen in der der ersten Richtung entgegengesetzten Richtung erfolgt. Auf diese Weise werden Fehlbedienungen weitgehend ausgeschlossen, da für jede Richtung ein eigenes Bedienelement vorgesehen ist.

Ein weiterer Vorteil besteht darin, daß das zumindest eine Bedienelement zumindest in vier Richtungen beweglich ist und daß bei Betätigung des zumindest einen Bedienelementes die Auswahl einer Position in Abhängigkeit von der eingestellten Richtung des zumindest einen Bedienelementes erfolgt. Auf diese Weise wird die Übersichtlichkeit und der Bedienkomfort für den Benutzer weiter erhöht, da nur ein einziges Bedienelement erforderlich ist, wodurch außerdem Platz, Aufwand und Kosten eingespart werden. Da für die Auswahl einer an der Anzeigevorrichtung dargestellten Bedienfunktion nur noch ein Bedienelement erforderlich ist, kann diese Auswahl noch schneller erfolgen und erfordert noch weniger Aufmerksamkeit des Benutzers, so daß vor allem bei Ausbildung des Rundfunkempfängers als Autoradio die Aufmerksamkeit des Benutzers für den Straßenverkehr noch weniger beeinträchtigt wird.

Ein weiterer Vorteil besteht darin, daß die Anzeigevorrichtung und/oder die Bedienvorrichtung von dem Rundfunkempfänger abgesetzt ist. Auf diese Weise wird der Bedienkomfort für den Benutzer weiter erhöht, da die Anbringungsorte für die Anzeigevorrichtung und die Bedienvorrichtung an die Bedürfnisse des Benutzers angepaßt werden können, und vom Standort des Rundfunkempfängers unabhängig sind. Dies ist ebenfalls bei der Ausbildung des Rundfunkempfängers als Autoradio von besonderer Bedeutung, da die Anzeigevorrichtung bei Anbringung beispielsweise an der Instrumententafel und der Bedienvorrichtung am Lenkrad der Blick des Benutzers für die Auswahl einer an der Anzeigevorrichtung dargestellten Bedienvorrichtung nur unwesentlich vom Straßenverkehr abgewendet werden muß und beide Hände am Lenkrad verbleiben können. Auf diese Weise wird die Verkehrssicherheit nur unwesentlich beeinträchtigt.

Besonders vorteilhaft ist es, daß eine Datenverbindung zwischen der Anzeige- und/oder der Bedienvorrichtung und dem Rundfunkempfänger optisch, vorzugsweise im Infrarot-Bereich erfolgt. Auf diese Weise kann die Anzeige- und/oder die Bedienvorrichtung ohne störende Kabelverbindungen vom Rundfunkempfänger abgesetzt werden.

Dasselbe gilt für die Einrichtung einer Datenverbindung zwischen der Anzeige- und/oder der Bedienvorrichtung und dem Rundfunkempfänger über Funk. Dabei ergibt sich jedoch der zusätzliche Vorteil, daß eine solche Datenverbindung auch dann bestehen bleibt, wenn die optische Verbindung beispielsweise durch lichtundurchlässige Gegenstände unterbrochen wird.

### Zeichnung

Ausführungsbeispiele der Erfindung sind in der Zeichnung dargestellt und in der nachfolgenden Beschreibung näher erläutert. Es zeigen Figur 1 einen erfindungsgemäßen Rundfunkempfänger mit abgesetzter Bedienvorrichtung, Figur 2 einen erfindungsgemäßen Rundfunkempfänger mit abgesetzter Anzeigevorrichtung und abgesetzter Bedienvorrichtung und Figur 3 eine alternative Ausführungsform einer Bedienvorrichtung.

### Beschreibung des Ausführungsbeispiels

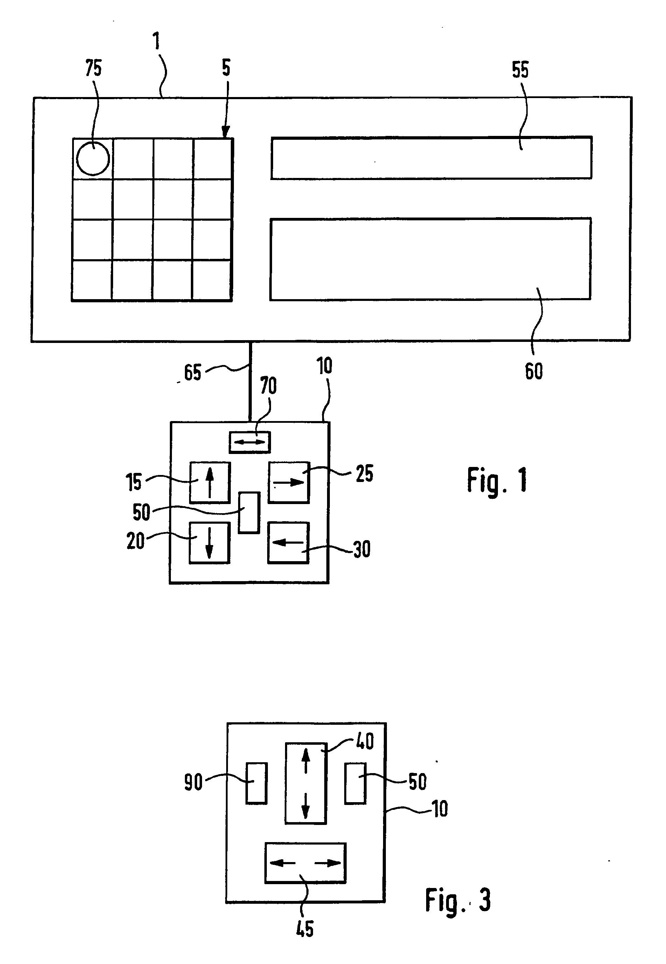

In Figur 1 kennzeichnet 1 einen als Autoradio ausgebildeten Rundfunkempfänger mit einer Anzeigevorrichtung 5, einem Kassettenschacht 55 und einem Display 60 zur Darstellung beispielsweise des Sendernamens oder der Empfangsfrequenz eines gerade empfangenen Rundfunksenders. Über ein Kabel 65 ist an das Autoradio 1 eine Bedienvorrichtung 10 angeschlossen, die eine erste Taste 15, eine zweite Taste 20, eine dritte Taste 25, eine vierte Taste 30, ein als Bestätigungstaste ausgebildetes weiteres Bedienelement 50 und einen als Wippschalter ausgebildeten Lautstärkeregler 70 umfaßt. Die Bedienvorrichtung 10 kann beispielsweise am Lenkrad eines Kraftfahrzeugs zur Bedienung des Autoradios 1 befestigt sein. Dabei kann die Lautstärke der an das Autoradio 1 angeschlossenen Lautsprecher mittels des Lautstärkereglers 70 eingestellt werden. Die Anzeigevorrichtung 5 ist als Matrix aus vier Spalten und vier Zeilen ausgebildet und beinhaltet somit 16 Positionen zur Darstellung jeweils einer Bedienfunktion des Autoradios 1. Auf diese Weise lassen sich also sechzehn Bedienfunktionen des Autoradios 1 gleichzeitig an der Anzeigevorrichtung 5 des Autoradios 1 darstellen. Dabei können die Bedienfunktionen im vollen Ausbauzustand des Autoradios 1 mit Rundfunkempfangsteil, Kassettenteil, Compact-Disc-Wechsler, Equalizer, Navigationsteil, Video/TV-Einheiten, Telefon und optionalem Zusatzverstärker zur Auswahl der entsprechenden Komponenten dienen und darüber hinaus nach Auswahl einer entsprechenden Komponente für diese Komponente weitere Zusatzfunktionen zur Verfügung stellen. Dabei können beispielsweise in einem Grundmenü an der Anzeigevorrichtung 5 Bedienfunktionen zur Auswahl der verschiedenen Komponenten dargestellt werden. Nach Auswahl und Bestätigung einer entsprechenden Bedienfunktion bzw. Komponente an der Anzeigevorrichtung 5 wird dann an der Anzeigevorrichtung ein Untermenü dargestellt, das die zu der ausgewählten Komponente gehörenden Bedienfunktionen enthält. So kann beispielsweise bei Auswahl und Bestätigung der Komponente Telefon aus dem Grundmenü die Anzeigevorrichtung 5 auf die Einträge aus einem Telefonbuchspeicher umschalten, so daß nun an den einzelnen Matrixelementen bzw. Positionen der Anzeigevorrichtung 5 jeweils ein Name aus dem Telefonbuchspeicher erscheint und mittels der Bedienvorrichtung 10 zur Anwahl ausgewählt werden kann. Je nach Bedienfunktionsumfang des Grundmenüs bzw. der einzelnen Untermenüs sind für die Anzeigevorrichtung 5 gegebenenfalls mehr als die beschriebenen vier Spalten bzw. Zeilen vorzusehen oder gegebenenfalls eine Bedienfunktion, deren Auswahl die Darstellung eines weiteren Untermenüs mit bislang aus Platzgründen nicht an der Anzeigevorrichtung 5 darstellbaren Bedienfunktionen ermöglicht. Dadurch können auch weniger als die beschriebenen vier Spalten bzw. Zeilen für die Anzeigevorrichtung 5 vorgesehen werden, vor allem dann, wenn für das Autoradio 1 nur eingeschränkte Platzverhältnisse für die Unterbringung im Kraftfahrzeug vorgesehen sind. Weiterhin ist es nicht erforderlich, daß jedes Matrixelement durch die Darstellung einer Bedienfunktion belegt ist. Nach Einschalten des Autoradios 1 durch einen Ein-/Ausschalter, der in Figur 1 nicht dargestellt ist, wird an der Anzeigevorrichtung 5 das Grundmenü dargestellt. Dabei ist ein Matrixelement bzw. die dort dargestellte Bedienfunktion durch eine beispielsweise als Kreis ausgebildete Markierung 75 gekennzeichnet oder auf andere Weise, beispielsweise durch farbliche Hinterlegung. Gemäß dem Ausführungsbeispiel nach Figur 1 befindet sich die Markierung 75 nach Einschalten des Autoradios 1 im linken oberen Matrixelement der Anzeigevorrichtung 5. Durch Betätigung der zweiten Taste 20 kann die Markierung 75 in der selben Spalte nach unten verschoben werden, und die entsprechenden in dieser Spalte befindlichen anderen Matrixelemente mit den dort dargestellten Bedienfunktionen können dadurch ausgewählt werden. Durch Betätigung der ersten Taste 15 kann die Markierung 75 wieder in derselben Spalte nach oben verschoben werden. Durch Betätigung der dritten Taste 25 erfolgt eine Verschiebung der Markierung 75 innerhalb einer Zeile nach rechts und durch Betätigung der vierten Taste 30 erfolgt eine Verschiebung der Markierung 75 in derselben Zeile nach links. Durch Betätigung der Bestätigungstaste 50 wird die gerade durch die Markierung 75 markierte Bedienfunktion aktiviert.

Somit erfolgt durch Betätigung der ersten Taste 15 eine Auswahl von Positionen in einer Spalte nach oben, durch Betätigung der zweiten Taste 20 eine Auswahl von Positionen in einer Spalte nach unten, durch Betätigung der dritten Taste 25 eine Auswahl von Positionen in einer Zeile nach rechts und durch Betätigung der vierten Taste 30 eine Auswahl von Positionen in einer Zeile nach links.

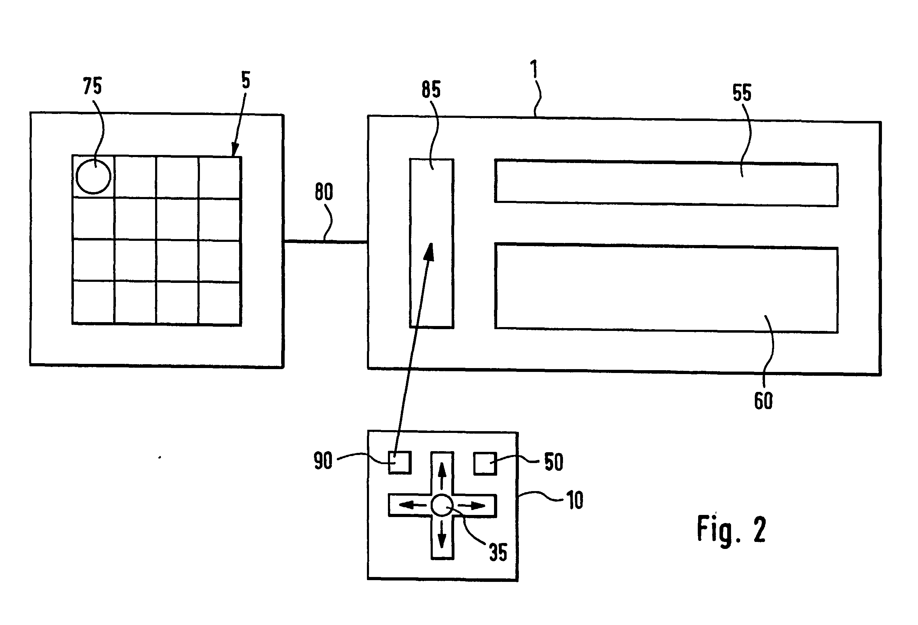

Gemäß Figur 2 ist auch die Anzeigevorrichtung 5 vom Autoradio 1 abgesetzt und durch ein Kabel 80 zur Datenübertragung mit diesem verbunden. Die Bedienvorrichtung 10 ist weiterhin vom Autoradio 1 abgesetzt, wobei die Datenverbindung nicht mehr über Kabel erfolgt, sondern optisch durch Signale im Infrarot-Bereich oder einem anderen Lichtwellenbereich. Auch die Datenübertragung zwischen Autoradio 1 und Anzeigevorrichtung 5 könnte optisch erfolgen. Für die optische Datenübertragung weist das Autoradio 1 einen Infrarot-Empfänger 85 auf, der Signale von einem Infrarot-Sender 90 der Bedienvorrichtung 10 empfängt. Gemäß Figur 2 umfaßt die Bedienvorrichtung 10 weiterhin die Bestätigungstaste 50. Die Auswahl der Bedienfunktionen an der Anzeigevorrichtung 5 erfolgt nun jedoch mittels eines einzigen Auswahlbedienelementes 35. Das Auswahlbedienelement 35 läßt sich nach oben, nach unten, nach links und nach rechts bewegen. Wird das Auswahlbedienelement 35 nach oben bewegt, so verschiebt sich die Markierung 75 in der aktuellen Spalte nach oben, wird das Auswahlbedienelement 35 nach unten bewegt, so verschiebt sich die Markierung 75 in der aktuellen Spalte nach unten, wird das Auswahlbedienelement 35 nach links bewegt, so verschiebt sich die Markierung 75 in der aktuellen Zeile nach links, wird das Auswahlbedienelement 35 nach rechts bewegt, so verschiebt sich die Markierung 75 in der aktuellen Zeile nach rechts. Der Bewegung der Markierung 75 in die einzelnen Richtungen sind durch die seitlichen Begrenzungen der Anzeigevorrichtung 5 Grenzen gesetzt.

Das Auswahlbedienelement 35 kann auch wie ein Joystick bei einem Computer ausgebildet sein, der eine Bewegung in beliebiger Richtung ermöglicht, so daß jede Bewegung in eine horizontale und eine vertikale Bewegung zerlegt wird und somit die Markierung 75 gleichzeitig die aktuelle Spalte und die aktuelle Zeile wechseln kann, wenn keine der vier Hauptrichtungen nach oben, nach unten, nach links bzw. nach rechts, sondern eine von diesen Hauptrichtung verschiedene Richtung mit dem Auswahlbedienelement 35 eingestellt wird.

Anstelle einer optischen Datenübertragung zwischen der Bedienvorrichtung 10 und dem Autoradio 1 bzw. zwischen dem Autoradio 1 und der Anzeigevorrichtung 5 kann auch eine Funkübertragung gewählt werden, die den Vorteil hat, daß sie nicht durch lichtundurchlässige Gegenstände unterbrochen werden kann.

Gemäß Figur 3 ist eine weitere Ausführungsform der Bedienvorrichtung 10 dargestellt. Sie umfaßt neben dem Infrarotsender 90 und der Bestätigungstaste 50 eine erste Schaltwippe 40 und eine zweite Schaltwippe 45. Die erste Schaltwippe 40 ist dabei vertikal angeordnet und die zweite Schaltwippe 45 horizontal. Durch Betätigung der ersten Schaltwippe 40 wird die Markierung 75 in der aktuellen Spalte nach oben bzw. nach unten verschoben. Durch Betätigung der zweiten Schaltwippe 45 wird die Markierung 75 in der aktuellen Zeile nach links bzw. nach rechts verschoben.

Bei der Ausgestaltung der Anzeigevorrichtung 5 können auch Spalten mit unterschiedlicher Zeilenanzahl bzw. Zeilen mit unterschiedlicher Spaltenanzahl verwendet werden, so daß die Anzeigevorrichtung 5 zumindest teilweise zweidimensional ausgebildet ist.

## Patentansprüche

1. Rundfunkempfänger (1), insbesondere Autoradio, mit einer Anzeigevorrichtung (5) und einer Bedienvorrichtung (10), wobei an der Anzeigevorrichtung (5) Bedienfunktionen darstellbar und durch Betätigung der Bedienvorrichtung (10) auswählbar sind, wobei für die Darstellung der Bedienfunktionen an der Anzeigevorrichtung (5) Positionen vorgesehen sind, die die Anzeigevorrichtung (5) zumindest teilweise zweidimensional aufteilen**dadurch gekennzeichnet, dass** eine Auswahl der Bedienfunktionen durch Betätigung zumindest eines richtungsabhängigen Bedienelementes (15, 20, 25, 30, 35, 40, 45) der Bedienvorrichtung (10) derart erfolgt, dass eine Markierung (75) in der Anzeigevorrichtung (5) zur Auswahl einer Bedienfunktion verschoben wird, dass die Bedienvorrichtung (10) ein weiteres Bedienelement (50) umfasst und dass durch eine Betätigung des weiteren Bedienelementes (50) eine Aktivierung der ausgewählten Bedienfunktion erfolgt.

2. Rundfunkempfänger (1) nach Anspruch 1, **dadurch gekennzeichnet, dass** die Positionen Elemente einer Matrix aus Spalten und Zeilen bilden.

3. Rundfunkempfänger (1) nach Anspruch 2, **dadurch gekennzeichnet, dass** eine erste Schaltwippe (40) vorgesehen ist, mittels der eine Auswahl von Positionen in den Spalten erfolgt, und dass eine zweite Schaltwippe (45) vorgesehen ist, mittels der eine Auswahl von Positionen in den Zeilen erfolgt.

4. Rundfunkempfänger (1) nach Anspruch 2 oder 3, **dadurch gekennzeichnet, dass** eine erste Taste (15) vorgesehen ist, mittels der eine Auswahl von Positionen in den Spalten in einer ersten Richtung erfolgt, dass eine zweite Taste (20) vorgesehen ist, mittels der eine Auswahl von Positionen in den Spalten in der der ersten Richtung entgegengesetzten Richtung erfolgt, dass eine dritte Taste (25) vorgesehen ist, mittels der eine Auswahl von Positionen in den Zeilen in einer ersten Richtung erfolgt und dass eine vierte Taste (30) vorgesehen ist, mittels der eine Auswahl von Positionen in den Zeilen in der der ersten Richtung entgegengesetzten Richtung erfolgt.

5. Rundfunkempfänger (1) nach einem der vorherigen Ansprüche, **dadurch gekennzeichnet, dass** das zumindest eine Bedienelement (35) zumindest in vier Richtungen beweglich ist und dass bei Betätigung des zumindest einen Bedienelementes (35) die Auswahl einer Position in Abhängigkeit von der eingestellten Richtung des zumindest einen Bedienelementes (35) erfolgt.

6. Rundfunkempfänger (1) nach einem der vorherigen Ansprüche, **dadurch gekennzeichnet, dass** die Anzeigevorrichtung (5) und/oder die Bedienvorrichtung (10) von dem Rundfunkempfänger (1) abgesetzt ist.

7. Rundfunkempfänger (1) nach Anspruch 6, **dadurch gekennzeichnet, dass** eine Datenverbindung zwischen der Anzeige- (5) und/oder der Bedienvorrichtung (10) und dem Rundfunkempfänger (1) über Kabel erfolgt.

8. Rundfunkempfänger (1) nach Anspruch 6 oder 7, **dadurch gekennzeichnet, dass** eine Datenverbindung zwischen der Anzeige- (5) und/oder der Bedienvorrichtung (10) und dem Rundfunkempfänger (1) optisch erfolgt.

9. Rundfunkempfänger (1) nach Anspruch 6, 7 oder 8, **dadurch gekennzeichnet, dass** eine Datenverbindung zwischen der Anzeige- (5) und/oder der Bedienvorrichtung (10) und dem Rundfunkempfänger (1) über Funk erfolgt.

## Claims

1. Broadcast radio receiver (1), particularly a car radio, having a display apparatus (5) and a control apparatus (10), where the display apparatus (5) is able to show control functions which can be selected by operating the control apparatus (10), positions for showing the control functions on the display apparatus (5) being provided which split the display apparatus (5) at least to some extent two-dimensionally, **characterized in that** at least one directionally dependent control element (15, 20, 25, 30, 35, 40, 45) of the control apparatus (10) is operated in order to select the control functions such that a marker (75) is moved in the display apparatus (5) in order to select a control function, **in that** the control apparatus (10) comprises a further control element (50) and **in that** operating the further control element (50) activates the selected control function.

2. Broadcast radio receiver (1) according to Claim 1, **characterized in that** the positions form elements of a matrix comprising columns and rows.

3. Broadcast radio receiver (1) according to Claim 2, **characterized in that** a first switching rocker (40) is provided which is used to select positions in the columns, and **in that** a second switching rocker (45) is provided which is used to select positions in the rows.

4. Broadcast radio receiver (1) according to Claim 2 or 3, **characterized in that** a first key (15) is provided which is used to select positions in the columns in a first direction, **in that** a second key (20) is provided which is used to select positions in the columns in the direction opposite to the first direction, **in that** a third key (25) is provided which is used to select positions in the rows in a first direction, and **in that** a fourth key (30) is provided which is used to select positions in the rows in the direction opposite to the first direction.

5. Broadcast radio receiver (1) according to one of the preceding claims, **characterized in that** the at least one control element (35) moves in at least four directions, and **in that** when the at least one control element (35) is operated a position is selected on the basis of the direction set for the at least one control element (35).

6. Broadcast radio receiver (1) according to one of the preceding claims, **characterized in that** the display apparatus (5) and/or the control apparatus (10) is/are remote from the broadcast radio receiver (1).

7. Broadcast radio receiver (1) according to Claim 6, **characterized in that** a data link between the display apparatus (5) and/or the control apparatus (10) and the broadcast radio receiver (1) is made by means of cable.

8. Broadcast radio receiver (1) according to Claim 6 or 7, **characterized in that** a data link between the display apparatus (5) and/or the control apparatus (10) and the broadcast radio receiver (1) is made optically.

9. Broadcast radio receiver (1) according to Claim 6, 7 or 8, **characterized in that** a data link between the display apparatus (5) and/or the control apparatus (10) and the broadcast radio receiver (1) is made by radio.

## Revendications

1. Récepteur radio (1), en particulier autoradio, comportant un dispositif d'affichage (5) et un dispositif de commande (10), des fonctions de commande pouvant être représentées sur le dispositif d'affichage (5) et sélectionnées grâce à l'actionnement du dispositif de commande (10), et avec pour la représentation des fonctions de commande sur le dispositif d'affichage (5), des positions divisant le dispositif d'affichage (5) au moins en partie en deux dimensions,
**caractérisé en ce que**
les fonctions de commande sont choisies en actionnant au moins un élément de commande (15, 20, 30, 35, 40, 45) dépendant de la direction, du dispositif de commande (10), une marque (75) est décalée dans le dispositif d'affichage (5) pour sélectionner une fonction de commande, le dispositif de commande (10) comporte un autre élément de commande (50) et la fonction de commande sélectionnée est activée grâce à l'actionnement de l'autre élément de commande (50).

2. Récepteur radio (1) selon la revendication 1,
**caractérisé en ce que**
les positions forment des éléments d'une matrice constituée de colonnes et de lignes.

3. Récepteur radio (1) selon la revendication 2,
**caractérisé en ce qu'**
on prévoit un bouton à bascule (40) pour sélectionner des positions dans les colonnes et un deuxième bouton à bascule (45) pour des positions sur les lignes.

4. Récepteur radio (1) selon la revendication 2 ou 3,
**caractérisé en ce qu'**
on prévoit une première touche (15) pour sélectionner des positions dans les colonnes dans une première direction, une deuxième touche (20) pour des positions dans les colonnes dans la direction opposée à la première direction, une troisième touche (25), pour sélectionner des positions sur les lignes dans une première direction et une quatrième touche (30) pour des positions sur les lignes dans la position opposée à la première direction.

5. Récepteur radio (1) selon l'une quelconque des revendications précédentes,
**caractérisé en ce qu'**
au moins un élément de commande (35) est mobile au moins dans quatre directions et en cas d'actionnement de l'élément de commande (35), une position est choisie en fonction de la direction fixée de l'élément de commande (35).

6. Récepteur radio (1) selon l'une quelconque des revendications précédentes,
**caractérisé en ce que**
le dispositif d'affichage (5) et/ou le dispositif de commande (10) est décalé par rapport au récepteur radio (1).

7. Récepteur radio (1) selon la revendication 6,
**caractérisé en ce qu'**
une liaison de données entre la dispositif d'affichage (5) et/ou le dispositif de commande (10) et le récepteur radio (1) est assurée par des câbles.

8. Récepteur radio (1) selon la revendication 6 ou 7,
**caractérisé en ce qu'**
une liaison de données entre le dispositif d'affichage (5) et/ou le dispositif de commande (10) et le récepteur radio (1) est optique.

9. Récepteur radio (1) selon la revendication 6, 7 ou 8,
**caractérisée en ce qu'**
une liaison de donnée entre le dispositif d'affichage (5) et/ou le dispositif de commande (10) et le récepteur radio (1) est une liaison radio.
